# EUROPEAN PATENT APPLICATION

(11) **EP 1 223 519 A2**
(43) Date of publication of application: **17.07.2002**
(21) Application number: 02000888.4
(22) Date of filing: 15.01.2002
(51) Int. Cl.: G06F 17/30

(54) **Information registration system and information registration support system**

(30) Priority: 15.01.2001 JP 2001007004
(71) Applicant: YAMAHA HATSUDOKI KABUSHIKI KAISHA, Iwata-shi Shizuoka-ken (JP)
(72) Inventor: Ishioka, Kazutoshi, Iwata-shi, Shizuoka-ken (JP); Moromoto, Hiroyuki, Iwata-shi, Shizuoka-ken (JP)
(74) Representative: Grünecker, Kinkeldey, Stockmair & Schwanhäusser Anwaltssozietät

(57) **Abstract**

An information registration system for registering subject information together with corresponding additional information, comprising: a memory means for storing the subject information with the corresponding additional information, a first entering means for entering the subject information; a second entering means for entering further information given by a registered person; a recognizing means for recognizing the contents of the further information entered with the second entering means; an additional information generating means for generating the additional information corresponding to the subject information on the basis of the contents of the further information; and a registering means for registering in the memory means the subject information linked to the corresponding additional information.

## Description

This invention relates to a system that makes it possible to register album pictures made to correspond to additional information and to peruse the album pictures together with the additional information. In particular, this invention relates to an information registration system and an information registration support system that make it possible to enter data related to the pictures, such as area names, by simple entry operations to facilitate the creation of electronic albums.

The GPS (global positioning system) is a positioning system that makes it possible to locate in three dimensions (latitude, longitude, etc.) any place on the globe where radio beams are received from a number of orbiting satellites. Since each satellite is provided with an atomic clock, the GPS system can acquire time information from each satellite.

Digital cameras with built-in GPS have been conventionally proposed that record GPS information such as position information obtained with the GPS together with pictures taken with the camera. With such digital cameras, it is possible, when reproducing pictures taken, the places where the pictures were taken may be learned by referring to the position information obtained with the GPS and to search intended pictures by the names of the places where the pictures were taken.

When electronic albums are to be created using the pictured images taken with the conventional digital cameras, since GPS information is made to correspond to the pictured images, the pictured images may be categorized to some extent according to times or places at which the pictures were taken. Here, the electronic album is a thing that makes it possible to edit the pictured images on computers with mutual relation among them, so that they can be perused by the same feeling as with actual albums.

However, the above conventional digital cameras are not at all for the general public because of high cost of the GPS. Therefore, most users tend to edit electronic albums using pictured images without GPS information attached. In that case, users must do cumbersome work of presetting keywords and registering pictured images to specific categories. In particular, when pictured images are to be sorted according to position information or time information, the number of items to be registered such as latitude, longitude, etc. increases and the users are compelled to take much burden.

The present invention has been made taking note of the unsolved problems associated with the prior art. It is, therefore, the object of the present invention to provide an information registration system and an information registration support system that make it possible to enter data of area names related to pictures by simple entry operations and to facilitate creation of electronic albums.

The above object is solved by the subject-matter of the independent claims.

Preferred embodiments are the subject-matter of the dependent claims.

According to a first aspect of the present invention, there is provided an information registration system for registering subject information together with corresponding additional information, comprising a memory means for storing the subject information with the corresponding additional information, a first entering means for entering the subject information, a second entering means for entering further information given by a registered person, a recognizing means for recognizing the contents of the further information entered with the second entering means, an additional information generating means for generating the additional information corresponding to the subject information on the basis of the contents of the further information and a registering means for registering in the memory means the subject information linked to the corresponding additional information.

With the above constitution, when a registered person enters subject information using the first entering means and enters further information using the second entering means, the contents of the further information entered with the entering means are recognized with the recognizing means, additional information is generated with the additional information generating means, and the subject information entered is registered in the memory means and linked to the corresponding additional information generated with the additional information generating means.

Here, the second entering means may be of any constitution as long as it is adapted to enter information given by a registered person. For example, it may be adapted to enter information given by the registered person as text information or as voice information.

The entry of information using the first entering means includes not only direct entry but also choosing one or more than one candidates prepared in advance or dynamically generated. The above applies also for the entry of information using the second entering means.

The memory means is adapted to store the subject information by any possible means at any possible time, and may be adapted to have stored in advance the subject information or store the subject information that is not stored in advance but entered from outside when the device of this invention is operated.

Moreover, the system according to the present invention may be constituted to stand alone or as a network system of plural terminals interconnected for communication. In the latter case, each component element may be connected to any one of plural terminals as long as each element is connected to be capable of communicating.

Furthermore, the second entering means may be adapted to enter voice given by the registered person as voice information, and the recognizing means may be adapted to recognize the contents of the voice information entered with the second entering means.

With the above constitution, when a registered person enters voice using the second entering means, the voice information entered with the second entering means is recognized with the recognizing means.

Furthermore, the subject information may include album pictures to be pasted in albums, the additional information may include either one or both of picturing information on the pictured contents of the album pictures and registered person information on the registered person, and may be adapted to provide upon perusal request those album pictures in the memory means that are related to the perusal request together with additional information corresponding to the requested album pictures.

With the above constitution, when a registered person enters album pictures using the first entering means and enters further information using the second entering means, the contents of the further information entered with the second entering means is recognized with the recognizing means, picturing information or registered person information is generated with the additional information generating means, and the album pictures entered are registered, together with corresponding registered person information or picturing information generated, in the memory means by means of the registering means. When a perusal request is received, some of the album pictures in the memory means that are related to the perusal request are provided together with corresponding picturing information or registered person information.

Furthermore, the second entering means may be adapted to enter comments on the album pictures as comment information, the registration means may be adapted to register in the memory means the album pictures entered with the first entering means linked to the corresponding comment information entered with the second entering means and to the additional information generated with the additional information generating means, and may be adapted to provide upon perusal request those album pictures in the memory means that are related to the perusal request together with comment information and additional information corresponding to the requested album pictures.

With the above constitution, when a registered person enters album pictures using the first entering means and enters comments using the second entering means, the contents of the comment information entered with the second entering means are recognized with the recognizing means, picturing information or registered person information is generated with the additional information generating means, and the album pictures entered are registered, together with corresponding registered person information or picturing information generated, in the memory means by means of the registering means. When a perusal request is received, some of the album pictures in the memory means that are related to the perusal request are provided together with corresponding comment information and picturing information or registered person information.

When the contents of the additional information generated with the additional information generating means are determined not to satisfy specified conditions, the support system preferably prompts the registered person to satisfy the specified conditions.

Prompting to satisfy the specified conditions includes for example, notifying that the specific conditions are not satisfied, notifying that the specific conditions are to be satisfied, prompting entry again using the second entering means or any other entering means.

Furthermore, when it is determined that the contents of the additional information given by the registered person or of the additional information entered in advance to be linked to the subject information entered with the first entering means are inconsistent with the contents of the additional information generated with the additional information generating means, the system is adapted to prompt the registered person to verify the contents of the additional information.

With the above constitution, when it is determined that the contents of the additional information given by the registered person or of the additional information entered in advance to be linked to the subject information entered are inconsistent with the contents of the additional information generated, the registered person is prompted to verify the contents of the additional information.

Prompting to verify the contents of the additional information here includes for example, notifying the presence of inconsistency, notifying part or whole of the additional information used as subject of determination to be corrected, or advising to solve the inconsistency, advising to ask if part or whole of the additional information used as subject of determination are correct.

While the information registration system and the information registration support system proposed above describe different aspects of the present invention, proposals according to the invention are not limited to the above and may, for instance, also include memory medias as described below.

According to one aspect of the present invention, there is provided a computer-readable memory medium having stored thereon a program to be applied to the information registration system as recited above, with the program being for executing a process realized with; a first entering means for entering subject information into a computer provided with a memory means storing the subject information together with related additional information, a second entering means for entering further information given by the registered person, a recognizing means for recognizing the contents of the further information entered with the second entering means, an additional information generating means for generating additional information based on the contents of the further information and a registration means for registering in the memory means the subject information related to and together with the additional information.

According to another aspect of the present invention, there is provided a computer-readable memory medium having stored thereon a program to be applied to the information registration support system described above for causing the computer to execute a process of prompting the registered person to satisfy the specific conditions when it is determined that the contents of the additional information generated with the additional information generating means do not satisfy the specific conditions.

According to still another aspect of the present invention, there is provided a computer-readable memory medium having stored thereon a program to be applied to the information registration support system described above for causing the computer to execute a process of prompting the registered person to verify the contents of the additional information when it is determined that the contents of the additional information given by the registered person or of the additional information entered in advance to be linked to the subject information entered with the first entering means are inconsistent with the contents of the additional information generated with the additional information generating means.

In the following, the present invention is explained in greater detail with respect to several embodiments thereof in conjunction with the accompanying drawings, wherein:
FIG. 1 is a block diagram to show the constitution of a computer according to the present invention;
FIG. 2 is a flowchart of the album picture registering process;
FIG. 3 is a flowchart of the process of entering registered person's information;
FIG. 4 is a flowchart of the process of entering pictured place information;
FIG. 5 is a flowchart of the process of entering pictured subject information; and
FIG. 6 shows an exemplary graphical user interface for creating an electronic album.

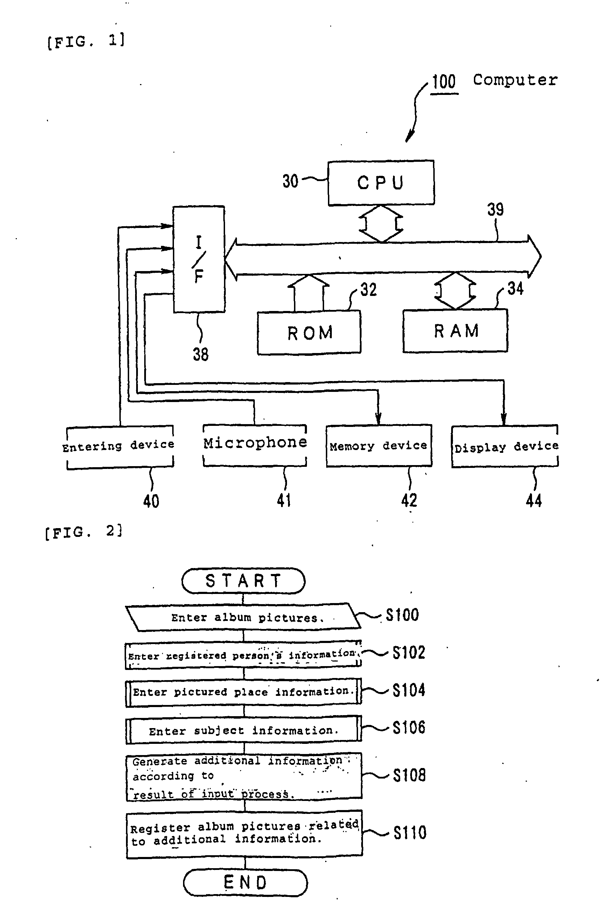

An embodiment of the invention will be hereinafter described in reference to the appended drawings, in which FIGs. 1 to 6 relate to an embodiment of the invention.

The present embodiment is an application of the invention to a case as shown in FIG. 1 in which electronic albums are created by registering plural album pictures together with related additional information by means of a computer 100 and the album pictures in the created electronic albums are made perusable together with related additional information.

First, the constitution of the computer 100 will be described referring to FIG. 1 which is a block diagram to show the constitution of the computer 100.

As shown in FIG. 1, the computer 100 is made up of a CPU 30 for controlling numerical operations and the entire system according to a control program, a ROM 32 with its specified region storing in advance the control program, etc. for the CPU 30, a RAM 34 for storing data read from the ROM 32 and calculated results necessary in the calculating process with the CPU 30, and an I/F 38 interfacing data to and from external devices. The above components are interconnected through a bus 39 for reciprocally transferring data.

To the I/F 38 are connected external devices; an entering device 40 including a keyboard and a mouse, as human interfaces, to permit data entry, a microphone 41 for entering voice, a memory device 42 for storing data and tables in the form of files, and a display device 44 for displaying images according to image signals.

In the memory device 42 are stored; a registered persons directory listing the names of registered persons who have registered electronic albums, an area names dictionary containing lists of place names information by areas of the whole country, and a subject names dictionary in which names of pictured subjects, album pictures, are registered in a list. Those dictionaries are used when generating additional information to be compared with the information entered by users.

In the memory device 42 are stored or can be stored electronic albums, with each album registering plural album pictures with related additional information. Here, the additional information includes for example registered person information showing the names of registered persons in electronic albums, pictured places information showing the names of places where the album pictures are taken, and pictured subjects information showing the names of subjects of the album pictures.

The CPU 30 is made up of a micro-processing unit MPU and others, and adapted to start up a specified program stored in a specified region of the ROM 32, and to execute album picture registering process shown in the flowchart of FIG. 2 according to the program. FIG. 2 is a flowchart of an album picture registering process.

The album picture registering process is to generate additional information on the basis of information entered by the user and to register the album pictures in the memory device 42 together with the additional information related to the album pictures. The process is adapted to go first to step S100 when the album picture registering process is executed with the CPU 30 as shown in FIG. 2.

In step S100, album pictures are entered. In step S102, a process of entering the information on the registered person is executed. In step S104, a process of entering pictured place information is executed. In step S106, a process of entering pictured subject information is executed. Then the process goes to step S108.

In step S108, additional information is generated on the basis of the result of the entering steps S102 to S106. The process then goes to step S110 in which the album pictures entered in step S100 are registered in the memory device 42 together with related additional information generated, ending a series of steps and returning to the first step.

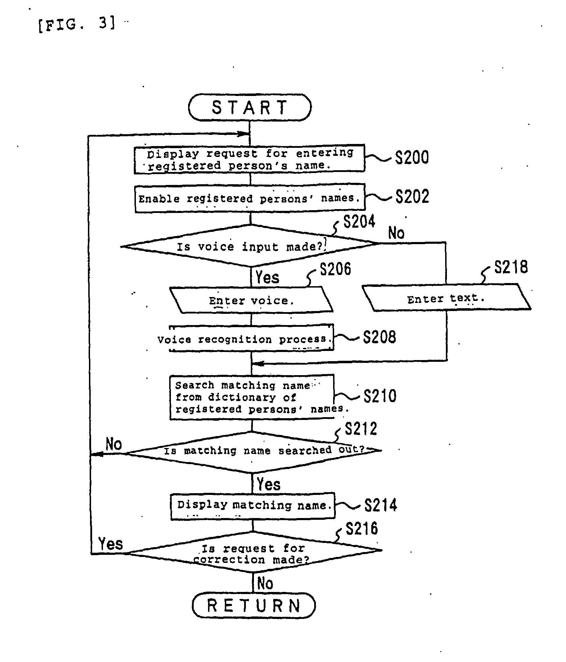

Next, the process of entering the registered person information in step S102 will be described in detail in reference to FIG. 3 which is a flowchart of a process of entering registered person information.

The process of entering the registered person information is adapted, when it is executed in step S102, to go first to step S200 as shown in FIG. 3.

In step S200, an instruction that the registered person's name is to be entered is displayed on the display device 44. In step S202, the registered persons directory is set effective. In step S204, it is determined whether a voice entry is present and, if it is determined affirmative (yes), the process goes to step S206.

In step S206, the user's voice is entered through the microphone 41. In step S208, a voice recognition process is executed to recognize the contents of the entered voice and to convert them into text information. In step S 210, the result of the voice recognition, the text information, is used to search a matching name of the registered person from the registered persons directory. Then the process goes to step S212.

In step S212, it is determined whether the matching name of the registered person has been searched out by the search in step S210. If the determination result is affirmative (yes), the process goes to step S214 to display the matching name of the registered person searched out on the display device 44, and moves on to step S216.

In step S216, it is determined whether a request for correcting the contents has been made by the user and, when the determination result is negative (no), the series of steps are terminated. In case that the determination is affirmative (yes), the process moves on to step S200.

On the other hand in step S212, if it is determined in step S210 that the matching name of the registered person has not been searched out (no), the process goes to step S200.

On the other hand, in case that in step S204 it is determined that no voice entry is present (no), the process goes to step S218, a text entry is made through the entering device 40, and the process goes to step S210.

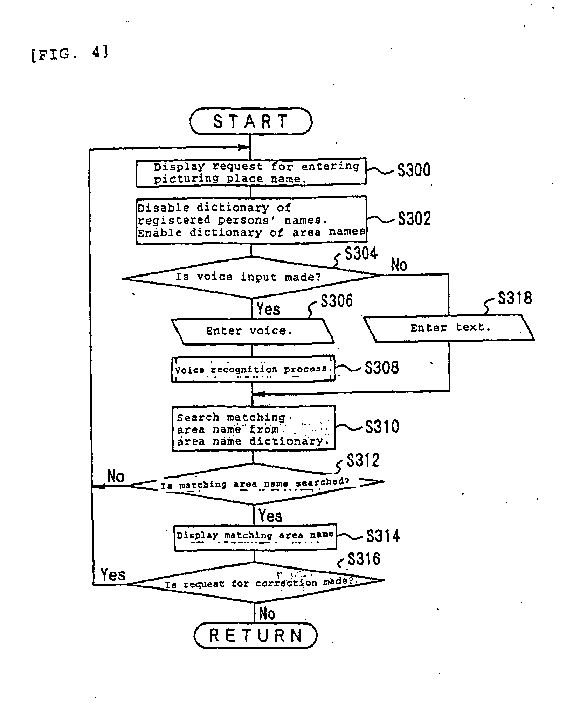

Next, the process of entering the pictured place information in step S104 will be detailed in reference to FIG. 4. FIG. 4 is a flowchart of a process of entering pictured place information.

The process of entering the pictured place information is adapted, when it is executed in step S104, to move first on to step S300 as shown in FIG. 4.

In step S300, an instruction is displayed on the display device 44 to the effect that the pictured place name is to be entered. In step S302, the registered persons directory is set to be ineffective and the place names dictionary is set to be effective. In step S304, presence of voice input is verified. If the verification is affirmative (yes), the process goes to step S306.

In step S306, user's voice is entered through the microphone 41, followed by step S308 in which the contents of the voice information entered are recognized and converted into text information. In step S310, a matching place is looked up in the area name dictionary according to the result of the voice recognition, the text information. Then the process goes to step S312.

In step S312, it is determined whether a matching area name has been searched out in the search of step S310. If it is determined affirmative (yes), the process goes to step S314 to display the matching area searched out on the display device 44. Then the process goes to step S316.

In step S316, it is determined whether the user has requested correction of the contents. If the determination is negative (no), the series of steps are terminated to go to the first step; otherwise (yes), the process goes to step S300.

On the other hand, in case that it is determined in step 312 that no matching area has been searched out in the search of step S310 (no), the process goes to step S300.

On the other hand, in case that it is determined in step S304 that no voice input has been made (no), the process goes to step S318 to enter text through the entering device 40, and moves on to step S310.

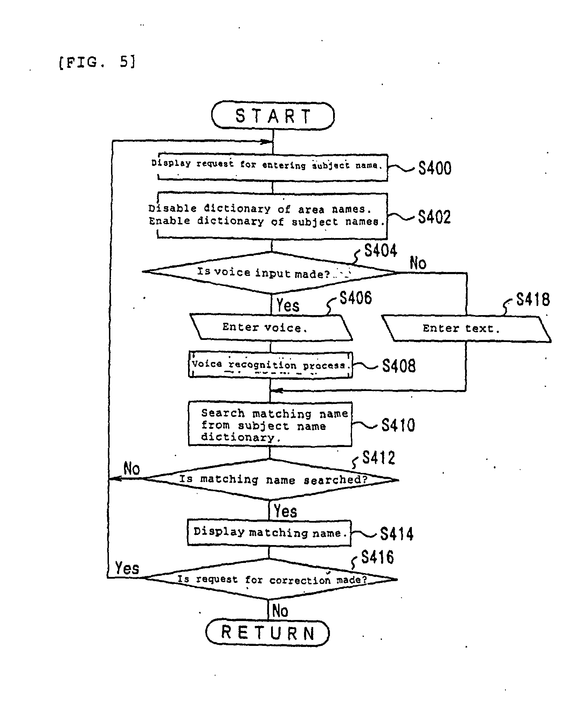

Next, the process of entering the pictured subject information in step S106 will be described in detail in reference to FIG. 5. FIG. 5 is a flowchart of a process of entering pictured subject information.

The process of entering pictured subject information is adapted, when it is executed in step S106, to go first to step S400 as shown in FIG. 5.

In step S400, an instruction that pictured subject names are to be entered is displayed on the display device 44. In step S402, the area names dictionary is set to be ineffective. In step S404 it is determined whether a voice input is made and, if it is determined affirmative (yes), the process goes to step S406.

In step S406, the user's voice is entered through the microphone 41. In step S408, a voice recognition process is executed to recognize the contents of the entered voice and convert them into text information. In step S 410, the result of the voice recognition, the text information, is used to search a matching name of the pictured subject from the pictured subject name directory. Then the process goes to step S412.

In step S412, it is determined whether the matching name of the pictured subject has been searched out by the search in step S410. If the determination is affirmative (yes), the process goes to step S414 to display the matching name of the pictured subject searched out on the display device 44, and moves on to step S416.

In step S416 it is determined whether a request for correcting the contents has been made by the user and, when the determination is negative (no), the series of steps are terminated. In case that the determination is affirmative (yes), the process moves on to step S400.

On the other hand in step S412, if it is determined in the search of step S410 that the matching name of the pictured subject has not been searched out (no), the process goes to step S400.

On the other hand, in case that it is determined in step S404 that no voice entry is present (no), the process goes to step S418, a text input is made through the input device 40, and the process goes to step S410.

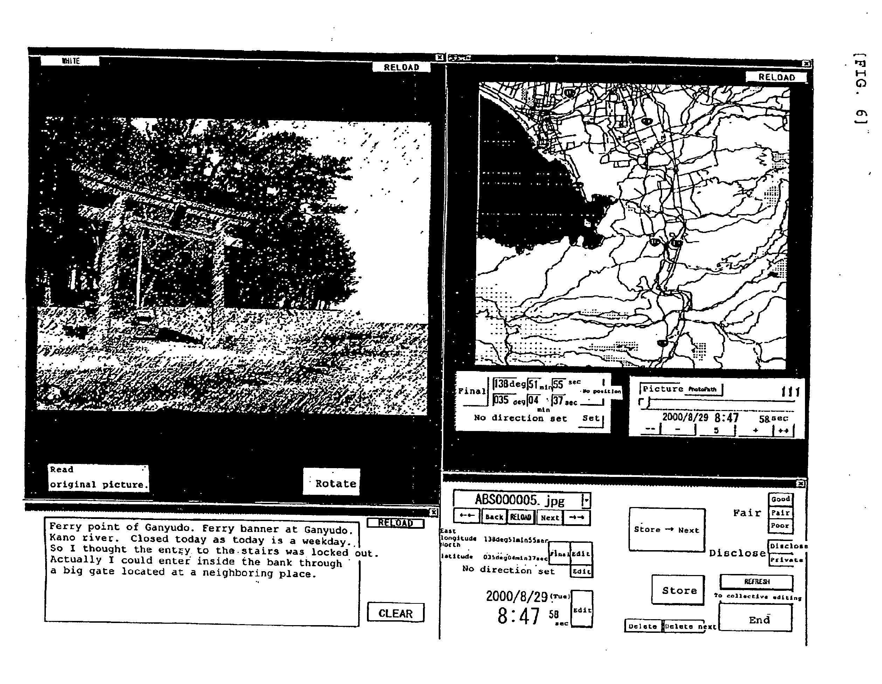

Next, the actions of the above embodiment will be described in reference to FIG. 6 which shows an exemplary graphical user interface for creating an electronic album.

To roughly describe how to create an electronic album, first as shown in FIG. 6 an album picture intended to be pasted in the album is entered and information necessary for generating additional information is entered by voice or text. Thus, registration of one album picture is over. The same step is repeated for all the album pictures to be pasted in the electronic album. The information required to generate additional information is e.g. entered in a text box as shown in FIG. 6. In case the information is to be entered by voice, an operation button (not shown) for entering voice information is pressed to instruct to that effect. The following is a detailed explanation of the process of registering one album picture, as part of an electronic album creating process.

To register album picture, the user enters first an album picture. Then, the CPU 30 displays an instruction that the registered person's name is to be entered through steps S100 and S200.

Next, when the user enters the registered person's name according to the entry instruction by voice for example, the registered persons directory is set to become effective through steps S202 and S206, and voice is entered through the microphone 41. The contents of the voice information entered are recognized through steps S208 and S210 and converted into text information, and on the basis of the converted text information, a matching name of registered person is searched from the registered persons directory. When the matching name of the registered person is searched out through the search, the process goes through steps S214 and S300 to display the matching name of the registered person. If no request for correction is made, an instruction is displayed to enter the pictured place name.

Next, when the user enters the name of the pictured place in response to the entry instruction by voice for example, the registered persons directory is set to become ineffective and the place names dictionary is set to become effective through steps S302 to S306, and voice is entered through the microphone 41. Through steps S308 and S310, the contents of the voice entered through the microphone 41 are recognized and converted into text, and a matching area name is searched out from the area names dictionary on the basis of the converted text information. When the matching area name is searched out through the search, the matching area is displayed through steps S314 and S400. If no request for correction is made, an instruction is displayed to enter the pictured subject name.

Next, when the user enters the pictured subject name according to the entry instruction, by voice for example, the area names directory is set to become ineffective and the area names dictionary is set to become effective through steps S402 and S406, and voice is entered through the microphone 41. Through steps S408 and S410, the contents of the voice information entered are recognized and converted into text information, and on the basis of the converted text information, a matching name of pictured subject is searched from the pictured subject dictionary. When the matching name of the pictured subject is searched out through the search, the process goes through steps S414, S108, and S100 to display the matching name of the pictured subject. If no request for correction is made, additional information is generated on the basis of the entry processes of steps S102 to S106 and the album picture entered is linked to the additional information generated, and registered in the memory device 42.

While the above embodiment is arranged to enter the registered person's name, the pictured place name, and the pictured subject name by voice, the entry may also be made by text. In that case, for the entry of the registered person's name for example, the text is entered through the input device 40 through steps S218 and S210, and the matching name of the registered person is searched out of the registered persons directory on the basis of the text information entered. The above is true for the entry of the picturing information and the pictured subject names.

As described above, this embodiment is arranged such that the information given by the user is entered as voice information or text information, the contents of the voice information or text information entered are recognized, additional information is generated on the basis of the result of the recognition, and the album picture entered is linked to the additional information generated and registered in the memory device 42.

With the above arrangement, since the additional information is generated from the voice information or text information given by the user, it is possible to register album pictures attached with additional information through an entry operation that is simpler than that of the conventional arrangement.

While the above embodiment is arranged such that the registered person's name, the pictured place name, and the pictured subject name may directly be entered by voice or text, the arrangement is not limited to the above but may be alternatively arranged that comments on the album pictures are entered as comment information, the contents of the entered comment information are recognized, additional information is generated on the basis of the result of the recognition, an the album pictures entered are registered, with related additional information attached, in the memory device 42.

In this way, the user can register album pictures attached with related additional information by simply entering the comments.

Concerning the above embodiment, while no specific explanation is made about verifying the information entered by the user, it may be arranged for example such that, when the contents of the additional information generated on the basis of the result of recognition are determined not to satisfy specified conditions, the user is prompted to satisfy the specified conditions. Here, the specified conditions may include for example registered person information, pictured place information, and pictured subject name information. Here, in case the contents of the generated additional information includes for example only the registered person name information and the pictured place name information, it may be arranged to indicate the need of entering missing information on the pictured subject name.

Thus, in case that the contents of the additional information generated from the information given by the user are incomplete when the additional information is to be registered, the user is prompted to complete the contents, so that the probability of incomplete contents of the additional information is lowered. Moreover, since the user can compare the contents of the additional information generated from the information given by the user with the contents of the additional information necessary for the registration, and may enter only the missing portion, it is possible to register the album images, with additional information attached, by relatively simple entry operations.

Also concerning the above embodiment, while no specific explanation is made about verifying the information entered by the user, it may for example be arranged such that, when it is determined that the contents of the additional information linked in advance to the album pictures or of the additional information given by the user are inconsistent with the contents of the additional information generated on the basis of the result of the recognition, the user is prompted to verify the contents of the additional information. For example, in case GPS information is attached to an album picture and the area specified with the GPS information is in disagreement with the area included in the additional information generated on the basis of the recognition result, a display is made to indicate the presence of disagreement.

Thus, in case inconsistency might be present in the contents of additional information given by the user at the time of registering the additional information, the user is prompted to verify the contents of the additional information. Therefore, possibility of presence of inconsistency in the contents of the additional information is reduced.

The above embodiment, concerning the area names dictionary, is arranged to search areas using a single area names dictionary. However, it may also be arranged to search with switched use of plural area names dictionaries. For example, it may be arranged as follows; Tohoku (Northeastern) area names dictionary, Kanto area names dictionary, Kinki area names dictionary, etc. are prepared. Area information is extracted from the text information or the result of voice recognition. If the extracted area information is about the Kanto area, a matching place is searched in the Kanto area names dictionary based on the text information or the result of the voice recognition. The above arrangement is also true for the registered persons directory and the pictured subject names dictionary.

The above embodiment is constituted to search matching information in steps S210, 310, and 410. More specifically, the matching information is searched as follows: For example, to search in step S310 a matching area name in an area names dictionary based on text information, or the result of voice recognition, administrative area division names such as prefecture names and city names are registered and held as area name information in an area names dictionary, and the information on the area that matches an administrative area division name included in the text information, or the result of voice recognition, is searched in the area names dictionary. The above is also true for the search for the registered person's name and the pictured subject name.

The above embodiments are all described as executing a control program prestored in the ROM 32 to execute the process shown in the flowchart of FIGs. 2 to 5. However, it may also be arranged to read the program from a memory medium storing a program specifying the above procedure into a RAM 34 and execute the program.

Here, the memory medium may be any computer-readable memory medium irrespective of the method of reading; a semiconductor memory medium such as a RAM, and ROM; a magnetic memory medium such as FD and HD; an optical reading type memory medium such as a CD, CDV, LD, and DVD; or a magnetic storing type/optical reading type medium such as MO.

The above embodiments are described as applications of this invention in which, as shown in FIG. 1, using a computer 100, an electronic album is created by registering plural album pictures together with related additional information, and the album pictures attached with the additional information in the created electronic album are made available for perusal. However, this invention is not limited to the above applications but may include other applications.

As described above, since the additional information is generated from the information given by the registered person, an effect is obtained that subject information with additional information attached may be registered by simpler entry operations in comparison with conventional arrangement.

Another effect is obtained that a registered person can register subject information with additional information attached simply by entering voice using an entry means.

Since registered person's information or picturing information is generated from the information given by the registered person, still another effect is obtained that album pictures with registered person's information or picturing information attached may be registered by relatively simple entry operations.

Still another effect is obtained that a registered person can register album pictures, with registered person's information or picturing information attached, by simply entering comments through an entering means.

In case that there is any omission in the contents of the additional information generated from the information given by the registered person at the time of registering the additional information, since the user is prompted to satisfy specified conditions, an effect is provided that the possibility of omission in the additional information is reduced. Furthermore, since the user can compare the contents of the additional information generated from the information given by the registered person with the contents of the additional information required for the registration, and has only to enter the missing portion, the subject information can be registered, with additional information attached, through relatively simple entry operations.

In case of presence of inconsistency in the contents of additional information generated on the basis of the information given by the user at the time of registering the additional information, the user is prompted to verify the contents of the additional information. Thus, still another effect is provided that the possibility of presence of inconsistency in the contents of the additional information is reduced.

## Claims

1. An information registration system for registering subject information together with corresponding additional information, **characterized by** comprising: a memory means for storing the subject information with the corresponding additional information, a first entering means for entering the subject information; a second entering means for entering further information given by a registered person; a recognizing means for recognizing the contents of the further information entered with the second entering means; an additional information generating means for generating the additional information corresponding to the subject information on the basis of the contents of the further information; and a registering means for registering in the memory means the subject information linked to the corresponding additional information.

2. The system according to claim 1, **characterized in that** the second entering means is adapted to enter voice given by the registered person as voice information, and the recognizing means is adapted to recognize the contents of the voice information entered with the second entering means.

3. The system according to claim 1 or 2, **characterized in that** the subject information includes album pictures to be pasted in albums, the additional information includes either one or both of picturing information on the pictured contents of the album pictures and registered person information on the registered person, and is adapted to provide upon request those album pictures in the memory means that are related to the request together with additional information corresponding to the requested album pictures.

4. The system according to claim 3, **characterized in that** the second entering means is adapted to enter comments on the album pictures as comment information, the registration means is adapted to register in the memory means the album pictures entered with the first entering means linked to the comment information entered with the second entering means and to the additional information generated with the additional information generating means, and is adapted to provide upon request those album pictures in the memory means that are related to the request together with comment information and additional information corresponding to the requested album pictures.

5. The system according to any one of claims 1 to 4, **characterized by** further comprising an information registration support means being adapted, when it is determined that the contents of the additional information generated with the additional information generating means does not satisfy specific conditions, to prompt the registered person to satisfy the specific conditions.

6. The system according to anyone of claims 1 to 4, **characterized by** further comprising an information registration support means being adapted, when it is determined that the contents of the additional information given by the registered person or of the additional information entered in advance to be linked to the subject information entered with the first entering means are inconsistent with the contents of the additional information generated with the additional information generating means, to prompt the registered person to verify the contents of the additional information.

7. A computer-readable medium comprising computer-executable instructions stored thereon for implementing an information registration system according to any one of the claims 1 to 6, when run on a computer.

8. A computer program comprising computer program code means for implementing an information registration system according to any one of the claims 1 to 6.
